# EUROPEAN PATENT APPLICATION

(11) **EP 4 375 883 A1**
(43) Date of publication of application: **29.05.2024**
(21) Application number: 22209758.6
(22) Date of filing: 26.11.2022
(51) Int. Cl.: G06N 3/09, G06T 7/11, G06V 20/69, G02B 21/36

(54) **METHOD FOR OPERATING A DISTRIBUTED DIGITAL MICROSCOPY SYSTEM AND DISTRIBUTED DIGITAL MICROSCOPY SYSTEM**

(71) Applicant: PreciPoint Group GmbH, 85354 Freising (DE)
(72) Inventor: Wildner, Ludwig, 85356 Freising (DE)
(74) Representative: Schmitt-Nilson Schraud Waibel Wohlfrom Patentanwälte Partnerschaft mbB

(57) **Abstract**

A method for operating a distributed digital microscopy system (100) is provided. The distributed digital microscopy system (100) comprises a user interface system (82), comprising a user computer (80) and a digital microscope (2) having an overview image acquisition portion (60) and a microscopic image acquisition portion (20), and a server system (90), remote from the user interface system (82). The method comprises: with the overview image acquisition portion (60) of the digital microscope (2), generating a first group of overview images for a first group of microscope slides; segmenting each of the first group of overview images with a pre-trained artificial intelligence, having been trained with an initial annotated training set of overview images; for a subset of the first group of overview images, receiving user input, representing updated segmented versions of the subset of the first group of overview images, via the user computer (80); at the server system (90), providing an updated annotated training set of overview images by adding additional annotated overview images, based on said subset of the first group of overview images and said updated segmented versions of the subset of the first group of overview images, to the initial annotated training set of overview images; at the server system (90), generating a re-trained artificial intelligence, trained with said updated annotated training set of overview images; with the overview image acquisition portion (60) of the digital microscope (2), generating a second group of overview images for a second group of microscope slides; segmenting each of the second group of overview images with the re-trained artificial intelligence; and with the microscopic image acquisition portion (20) of the digital microscope (2), selectively scanning those regions of the second group of microscope slides that correspond to one or more predetermined segmentation classes.

## Description

The present invention is in the field of digital microscopy. In particular, the present invention is in the field of digital microscopes that are capable of generating a comparably low resolution overview image of a sample, which may be provided in a comparably short amount of time, and of generating a comparably high resolution microscopic image of the sample, which may take longer to be generated. Further in particular, the present invention is in the field of automated sample scanning with the help of overview image acquisition and microscopic image acquisition capabilities of the digital microscope.

Most modern digital microscopes have two ways of providing images of the samples present on the stage of the digital microscope. By definition, digital microscopes are capable of taking partial images of the sample through a microscope objective. In this way, high resolution partial images may be generated, and an overall high resolution image of the sample may be provided via stitching / joining the partial images.

In addition to this generation of microscopic images of the samples, herein also referred to as microscopic image acquisition, many modern microscopes are capable of providing low resolution overview images of the samples. When analyzing a new sample, it is possible to generate an overview image as a first step. Based on said overview image, a user of the digital microscope may obtain an initial impression of the sample. Said initial impression may be used to define regions of interest, to pre-select regions to be included in the generation of the high resolution microscopic images, etc. The provision of the overview image may be seen as a "quick and dirty" way of getting an initial grasp at the content of the sample, in order to generate the microscopic images in a more targeted manner / in order to save time in the ensuing generation of the regions of interest of the sample with a high resolution.

Some modern digital microscopy systems provide a partial automation of said two-step process. In particular, it is known to apply algorithmic image processing to the overview images, to identify regions of interest within the overview images via said algorithmic image processing, and to control the microscopic image acquisition on the basis of the identified regions of interest. However, the available automated methods and systems are not considered fully satisfactory.

Accordingly, it would be beneficial to provide a digital microscopy system and a method of operating a digital microscopy system that provide for an improved identification of regions of interest and, thus, may provide for a microscopic image acquisition that is quicker and/or more targeted and/or more complete.

Exemplary embodiments of the invention include a method for operating a distributed digital microscopy system, wherein the distributed digital microscopy system comprises a user interface system, comprising a user computer and a digital microscope having an overview image acquisition portion and a microscopic image acquisition portion, and a server system, remote from the user interface system, wherein the method comprises: with the overview image acquisition portion of the digital microscope, generating a first group of overview images for a first group of microscope slides; segmenting each of the first group of overview images with a pre-trained artificial intelligence, having been trained with an initial annotated training set of overview images; for a subset of the first group of overview images, receiving user input, representing updated segmented versions of the subset of the first group of overview images, via the user computer; at the server system, providing an updated annotated training set of overview images by adding additional annotated overview images, based on said subset of the first group of overview images and said updated segmented versions of the subset of the first group of overview images, to the initial annotated training set of overview images; at the server system, generating a re-trained artificial intelligence, trained with said updated annotated training set of overview images; with the overview image acquisition portion of the digital microscope, generating a second group of overview images for a second group of microscope slides; segmenting each of the second group of overview images with the re-trained artificial intelligence; and with the microscopic image acquisition portion of the digital microscope, selectively scanning those regions of the second group of microscope slides that correspond to one or more predetermined segmentation classes.

Exemplary embodiments of the invention allow for the provision of a learning and iteratively improving framework that may achieve a highly targeted scanning of regions of interest of microscope slides. By segmenting overview images with a pre-trained artificial intelligence, by receiving user input representing updated segmented versions of overview images, by generating a re-trained artificial intelligence on the basis of said user input, and by using said re-trained artificial intelligence for scanning regions of interest of microscope slides, an improved handling and scanning of microscope slides can be achieved over time during the service life of the distributed digital microscopy system. In particular, the learnings from earlier microscope slide scanning runs may be beneficially made use of for improving the scanning results and/or the scanning speeds of later microscope slide scanning runs. This may be particularly useful in highly automated, high throughput digital microscopy systems.

By using a pre-trained artificial intelligence for a first group of overview images and relying on user input regarding said first group of overview images for a re-training of the artificial intelligence, a highly intuitive way of iteratively improving the automation of the scanning process may be provided to the user. Neither the user nor a segmentation algorithm programmer is required to understand and modify the details of an image segmentation algorithm. Rather, the user input may be given on a intuitive overview image level, such as via graphical markers indicating the updated segmentation of the overview images. The ensuing re-training of the artificial intelligence may be carried out without further substantive knowledge of the microscope slide scanning process. In other words, solely on the basis of updated segmentations, as received by a human user, an iterative improvement of the targeted scanning properties and/or of the scanning speed properties of microscopic image acquisition may be achieved. The improvement of the segmentation may be implemented via a background process that does not affect momentary scanning operations of the digital microscopy system.

According to exemplary embodiments of the invention, the method is implemented in a distributed digital microscopy system, comprising a user interface system and a server system. By separating the user interface system from the server system, the computationally intensive task of re-training the artificial intelligence may be carried out at a location where a lot of computing power and/or dedicated system components for the task of re-training an artificial intelligence may be available. On the other hand, the user interface system may be kept comparably lean, because the re-training of the artificial intelligence does not have to be carried out there. A learning and iteratively improving digital microscopy system may be provided with a highly effective distribution of functionality between a user interface system and a server system.

The distributed digital microscopy system comprises a user interface system and a server system. The term user interface system refers to a portion of the distributed digital microscopy system that is accessible by a human user. In other words, a human user can interface with the distributed digital microscopy system via the user interface system. As compared to the remote server system, the user interface system may also be referred to as a local portion of the distributed digital microscopy system. In particular, the human user may interact with the user computer, in order to control the digital microscope and/or to communicate with the remote server system. Further in particular, the human user may have access to the digital microscope for placing microscope slides on a stage of the digital microscope and/or on an automated slide feeding device of the digital microscope and for removing microscope slides from the stage of the digital microscope and/or from the automated slide feeding device. The server system is remote from the user inface system. In particular, the server system may be a cloud-based system. The server system and the user interface system may be coupled via suitable communication network, such as via the internet.

As indicated above, the steps of generating the first group of overview images, generating the second group of overview images, and selectively scanning the regions of interest of the second group of microscope slides take place at the user interface system, whereas the steps of providing an updated annotated training set of overview images and generating the re-trained artificial intelligence take place at the server system. The steps of segmenting each of the first group of overview images, receiving user input representing updated segmented versions, and segmenting each of the second group of overview images may take place either at the user interface system or at the server system.

In case the segmenting takes place at the server system, the first group of overview images and the second group of overview images may be transferred from the user interface system to the server system, before the segmenting takes place. In this scenario, the user input representing updated segmented versions of the subset of the first group of overview images may be received by the user computer first and may be passed on to the server system, i.e. the user input may be seen as being received by the server system as well. In this case, the user computer may function as an access port / gateway to the server system for the user. It is also possible that the user input is received at the server system via a different route, such as via an additional user interface device, e.g. a smartphone.

In this case, the different user interface devices may be jointly seen as the user computer.

It is also possible that the segmenting of each of the first group of overview images and each of the second group of overview images takes place at the user interface system. In this case, the user input representing updated segmented versions may be received at the user interface system, and the updated segmented versions may be transferred to the server system. It is also possible that the segmented versions of the first group of overview images and of the second group of overview images are transferred to the server system and that the receiving of the user input also takes place at the server system, with the user computer again acting as an access port / gateway.

Depending on where the segmentation takes place, the pre-trained artificial intelligence and/or the re-trained artificial intelligence may be transferred from the server system to the user interface system or may remain within the server system. In the latter case, a full central control over the pre-trained / re-trained artificial intelligence within the server system may be achieved.

The method comprises segmenting each of the first group of overview images with a pre-trained artificial intelligence and segmenting each of the second group of overview images with the re-trained artificial intelligence. The segmenting of an image may also be described as determining a particular one of a plurality of segmentation classes for each of a plurality of different image portions. It can also be said that a respective one of a plurality of segmentation classes is attributed to each image portion. The image portions may be minimal portions of the image, such as individual pixels of the image, or somewhat larger portions of the image, such as pixel groups. The pixel groups may in particular be square or rectangular pixel groups, e.g. 2x2, 3x3, 4x4, 5x5, etc. pixel groups. Segmentation of images is a per se known technique, wherein each portion of the image is assigned to a particular segmentation class. It can also be said that the full area of the image is split up into disjunct partial areas of the image, with each partial area belonging to a particular segmentation class and with the combination of the disjunct partial areas covering the full image. The plurality of segmentation classes may comprise two or three or four or five or more segmentation classes.

The method comprises segmenting each of the first group of overview images with a pre-trained artificial intelligence. This step may also be described as applying a pre-trained artificial intelligence to the first group of overview images. The pre-trained artificial intelligence is intended and configured for carrying out the task of performing image segmentation. Analagous considerations apply to the step of segmenting each of the second group of overview images with the re-trained artificial intelligence and to the re-trained artificial intelligence.

The method comprises receiving user input for a subset of the first group of overview images, with the user input representing updated segmented versions of the subset of the first group of overview images, via the user computer. It can also be said that the user input is received for at least one or for some or for all of the first group of overview images. In most application scenarios, user input will be received for some of the first group of overview images, i.e. for a subset of the first group of overview images in a narrow sense. The selective reception of user input may be the result of a partial number of images of the first group being evaluated by the user and/or may be the result of only some overview images of the first group being corrected / updated in terms of their segmentation by the user. In other words, with the user evaluating only a portion of the first group of overview images and/or with the user only updating the segmentation of a portion of the first group of overview images, user input may be received for only a portion of the first group of overview images, i.e. for a subset of the first group of overview images in a narrow sense.

The user input represents updated segmented versions of the subset of the first group of overview images. This expression encompasses implementations where the user input contains the updated segmented versions of the subset of the first group of overview images themselves or where the user input contains information indicating the differences between the updated segmented versions and the initial segmented versions of the subset of the first group of overview images or where the user input contains other suitable kind of information that results in or uniquely specifies or makes derivable the updated segmented versions of the subset of the first group of overview images.

The pre-trained artificial intelligence has been trained with an initial annotated training set of overview images, and the re-trained artificial intelligence has been trained with the updated annotated training set of overview images. The expression annotated training set of overview images refers to the combination of image data of the overview images and segmentation data of the overview images. The image data and the segmentation data may be provided separately or may be provided as an integrated data structure in an overlaid manner.

The term artificial intelligence refers to a software component that is not created via traditional programming. Rather, the term artificial intelligence refers to program code that has been generated via machine-learning. In other words, the artificial intelligence, as referred to herein, is a machine-learned piece of software. From an initial annotated training set of overview images, i.e. from an initial set of overview images and an associated segmentation of the initial set of overview images, the pre-trained artificial intelligence has learned the task of segmenting an overview image. The pre-trained artificial intelligence will apply these learning to further overview images and will carry out according instances of segmentation. Analogous considerations apply to the re-trained artificial intelligence. In operation, the artificial intelligence acts as a kind of black box, whose segmentation outputs cannot be predicted with full certainty and whose decision making process is hidden from review.

According to a further embodiment, the microscope slides carry biological samples, such as tissue samples or botanical samples. It has been found that particularly strong improvements in terms of segmentation quality can be achieved for biological samples with the method according to exemplary embodiments of the invention. However, it is pointed out that the microscope slides may carry other kinds of samples, such as metallic samples or stone samples, and that the method may also lead to some or all of the effects as described herein.

According to a further embodiment, said segmenting of each of the first group of overview images and/or said segmenting of each of the second group of overview images comprises a pixel-based segmenting of each of the first group of overview images and/or each of the second group of overview images. The expression of the pixel-based segmenting means that the segmentation of the first group of overview images and/or the second group of overview images takes place on a pixel level. In other words, every pixel of each of the first group of overview images and/or of each of the second group of overview images is segmented individually, i.e. a respective segmentation class is attributed to every pixel individually. In this way, the segmentation may be carried out with a maximum spatial resolution across the images in question.

According to a further embodiment, said segmenting of each of the first group of overview images and/or said segmenting of each of the second group of overview images comprises a semantic segmentation of each of the first group of overview images and/or a semantic segmentation of each of the second group of overview images. Semantic segmentation means that the content of the image in question is taken into account when attributing a particular segmentation class. For example, each semantic segmentation class may belong to a particular object class in the image in question.

According to a further embodiment, said semantic segmentation uses at least two semantic classes. In a particular embodiment, the semantic segmentation uses exactly two semantic classes. Further in particular, the semantic segmentation may use the exactly two semantic classes of sample and background. In this way, portions of the microscope slide that carry a portion of the sample and that may, as such, be potentially relevant regions of interest, can be effectively separated / distinguished from portions of the slide that do not carry a portion of the sample. The semantic class of sample may also be referred to as the foreground / non-background / non-carrier-substance / non-empty-space class. The semantic class of background may also be referred to as the empty space / carrier substance / carrier gel class.

According to a further embodiment, said segmenting of each of the first group of overview images with the pre-trained artificial intelligence comprises segmenting each of the first group of overview images with exactly two segmentation classes and said segmenting of each of the second group of overview images with the re-trained artificial intelligence comprises segmenting each of the second group of overview images with the same exactly two segmentation classes, wherein those regions of the second group of microscope slides are selectively scanned that correspond to a particular predetermined one of the exactly two segmentation classes. In the particular embodiment of the exactly two segmentation classes being sample and background, those regions of the second group of microscope slides are selectively scanned that correspond to the sample class.

According to a further embodiment, the semantic segmentation uses two or more semantic classes, wherein the two or more semantic classes do not only distinguish between sample and background. For example, the two or more semantic classes may contain different types of sample classes. For the particular type of microscope slides carrying biological samples, two exemplary non-background sample classes may be "cell" and "interstitial fluid" / "tissue fluid".

According to a further embodiment, each of the first group of overview images and/or each of the second group of overview images has between 1000 and 4000 pixels in a first dimension and between 500 and 2000 pixels in a second dimension. In particular, it is possible that each of the first group of overview images and/or each of the second group of overview images has about 2000 x 1000 pixels. With these image sizes, the overview images allow for a quick overview image acquisition by the digital microscope and a quick segmentation, while providing a reasonable amount of detail for achieving a high quality segmentation and an ensuing particularly targeted and/or complete and/or quick scanning of the regions of interest.

The image size of the first and second groups of overview images may also be given in terms of the total number of pixels. In an embodiment, each of the first group of overview images and/or each of the second group of overview images has between 1 megapixel and 10 megapixel. Analagous considerations regarding the beneficial trade-off regarding the size of the overview images apply.

According to a further embodiment, the pre-trained artificial intelligence has been trained with at least 500 annotated overview images. In particular, the pre-trained artificial intelligence may have been trained with between 1000 and 5000 annotated overview images, in particular with between 2000 and 3000 annotated overview images. These numbers of annotated overview images for the initial annotated training set have been found to result in a highly effective configuration of the pre-trained artificial intelligence for the task of segmenting overview images, while keeping the computational burden for carrying out the initial training at a reasonable level. The learning / training with annotated overview images is also referred to as supervised learning. Accordingly, the pre-trained artificial intelligence may be referred to as an artificial intelligence obtained via supervised learning.

According to a further embodiment, the pre-trained artificial intelligence comprises a convolutional neural network and/or the re-trained artificial intelligence comprises a convolutional neural network. Convolutional neural networks provide for particularly effective implementations of artificial intelligence components.

According to a further embodiment, the method further comprises checking said updated segmented versions of the subset of the first group of overview images at the server system. In particular, a plausibility check algorithm may be implemented at the server system. In this way, it may be prevented that grossly wrong and/or erroneously created updated segmented versions are included in the re-training of the artificial intelligence. Useless re-trainings of the artificial intelligence, which are highly computationally intensive, may be prevented. Also, grossly wrong trainings of the artificial intelligence, which may be perpetuated in further training cycles, may be prevented.

According to a further embodiment, the method further comprises checking a performance of the re-trained artificial intelligence in comparison with the pre-trained artificial intelligence at the server system. For example, a performance check set of overview images may be provided at the sever system, and both the re-trained artificial intelligence and the pre-trained artificial intelligence may be applied to the performance check set of overview images. In this way, the pre-trained artificial intelligence may act as a benchmark for the performance of the re-trained artificial intelligence. It is possible that the re-trained artificial intelligence is only used for the segmenting of the second group of overview images if the performance of the re-trained artificial intelligence exceeds the performance of the pre-trained artificial intelligence.

According to a further embodiment, the method further comprises obtaining a user identification, associated with the user input, wherein said providing of the re-trained artificial intelligence is carried out in a user-specific manner, depending on said user identification. In other words, only updated segmented versions of overview images from a particular user are taken into account, when re-training the artificial intelligence. Also, it is possible that said re-trained artificial intelligence is only used for segmenting further overview images, when the same user is working with the digital microscope. In this way, user preferences regarding the segmentation of overview images, such as user preferences with respect to how aggressive the sample background should be excluded, can be implemented and refined in an iterative manner. The identification and scanning of regions of interest may be adapted to the preferences / needs of a particular user, such as the preferences / needs of a particular pathologist.

According to a further embodiment, the method further comprises: for a subset of the second group of overview images, receiving user input, representing updated segmented versions of the subset of the second group of overview images, via the user computer; at the server system, expanding the updated annotated training set of overview images by adding additional annotated overview images, based on said subset of the second group of overview images and said updated segmented versions of the subset of the second group of overview images, to the updated annotated training set of overview images; at the server system, providing a further re-trained artificial intelligence, trained with said updated annotated training set of overview images; with the overview image acquisition portion of the digital microscope, generating a third group of overview images for a third group of microscope slides; segmenting each of the third group of overview images with the further re-trained artificial intelligence; and with the microscopic image acquisition portion of the digital microscope, selectively scanning those regions of the third group of microscope slides that correspond to one or more predetermined segmentation classes. The further re-trained artificial intelligence refers to a second instance of a re-trained artificial intelligence, with said second instance of re-trained artificial intelligence being based on the initial annotated training set of overview images, on the updated segmented versions of the subset of the first group of overview images, and on the updated segmented versions of the subset of the second group of overview images. With said second re-training, the artificial intelligence may be iteratively adapted and may provide for an iteratively improved segmenting of the overview images and, thus, of an iteratively improved scanning of regions of interest.

The additional features, modifications and effects, as described above with respect to the first re-training of the artificial intelligence, apply to the second and potentially further re-trainings of the artificial intelligence in an analagous manner. In particular, any suitable number of additional instances of receiving user input representing updated segmented versions of overview images and re-training the artificial intelligence with a further updated / expanded annotated training set may be carried out. For example, the receiving of user input representing updated segmented versions of overview images and the re-training of the artificial intelligence with a further updated / expanded annotated training set may be carried out with a fourth, fifth, sixth, etc. group of overview images.

According to a further embodiment, the distributed digital microscopy system comprises multiple user interface systems, each of the multiple user interface systems comprising a user computer and a digital microscope having an overview image acquisition portion and a microscopic image acquisition portion. With such a set-up, it is possible that the pre-trained artificial intelligence is generated only once and is distributed among the multiple user interface systems. In this way, a highly effective segmenting of overview images may take place at various user interface systems, while the computational burden of generating the pre-trained artificial intelligence is required only once.

According to a further embodiment, said providing of the updated annotated training set of overview images includes adding multiple sets of additional annotated images, each of said multiple sets of additional annotated images being based on overview images and updated segmented versions of overview images from a particular one of the multiple user interface systems. In this way, the user input from various user interface systems may be bundled at the server system and may contribute to quickly providing a re-trained artificial intelligence with a large data basis. By including user input from various user interface systems and, thus, potentially from various human users, a strong improvement of the artificial intelligence for the task of segmenting overview images may be achieved in a particularly quick manner.

Exemplary embodiments of the invention further include a distributed digital microscopy system, comprising: a user interface system, comprising a user computer and a digital microscope, wherein the digital microscope has an overview image acquisition portion and a microscopic image acquisition portion, wherein the user interface system is configured to: - generate overview images for microscope slides with the overview image acquisition portion, - segment overview images with an artificial intelligence and/or transmit overview images and receive segmented overview images, segmented remotely with an artificial intelligence, - selectively scan those regions of the microscope slides that correspond to one or more predetermined segmentation classes with the microscopic image acquisition portion, and - receive user input, representing updated segmented versions of overview images; and a server system, remote from the user interface system and coupled to the user interface system via a communication network, wherein the server system is configured to: - provide a pre-trained artificial intelligence, trained with an initial annotated training set of overview images, - pursuant to receiving said user input from the user interface system, generate a re-trained artificial intelligence, trained with an updated annotated training set of overview images, wherein the updated annotated training set of overview images comprises the initial annotated training set of overview images and additional annotated overview images, which are based on said user input, and - provide the re-trained artificial intelligence for segmenting further overview images. As indicated, the user interface system itself may be configured to segment overview images with an artificial intelligence. It is also possible that the segmentation capability with an artificial intelligence is implemented at another location, such as in the server system. In that case, the user interface system is configured to transmit the overview images and to receive segmented overview images, segmented with an artificial intelligence at said other location. The additional features, modifications and effects, as described above with respect to the method of operating a distributed digital microscopy system, apply to the distributed digital microscopy system in an analogous manner.

According to a further embodiment, the user interface system is configured to semantically segment overview images with an artificial intelligence. Additionally or alternatively, the user interface system is configured to transmit overview images and to receive semantically segmented overview images, segmented remotely with an artificial intelligence.

According to a further embodiment, the distributed digital microscopy system comprises: a plurality of user interface systems, wherein each of the plurality of user interface systems comprises a user computer and a digital microscope having an overview image acquisition portion and a microscopic image acquisition portion, wherein the server system is configured to: - pursuant to receiving user input from the plurality of user interface systems, generate the re-trained artificial intelligence, trained with the updated annotated training set of overview images, wherein the updated annotated training set of overview images comprises the initial annotated training set of overview images and multiple sets of additional annotated overview images, which are based on the user input from the plurality of user interface systems.

Further exemplary embodiments of the invention are described with respect to the accompanying drawings, wherein:
Fig. 1 shows a perspective view of a digital microscope, as may be used in a distributed digital microscopy system in accordance with an exemplary embodiment of the invention;
Fig. 2 shows a schematic diagram of selected components of the digital microscope of Fig. 1;
Fig. 3 shows a schematic diagram of a distributed digital microscopy system in accordance with an exemplary embodiment of the invention, primarily as perceived from a user perspective;
Fig. 4 shows a block diagram of a distributed digital microscopy system in accordance with an exemplary embodiment of the invention;
Fig. 5 illustrates an operation of a distributed digital microscopy system in accordance with an exemplary embodiment of the invention with the help of individual overview images and segmented versions thereof;
Fig. 6 shows a block diagram of a distributed digital microscopy system in accordance with another exemplary embodiment of the invention.

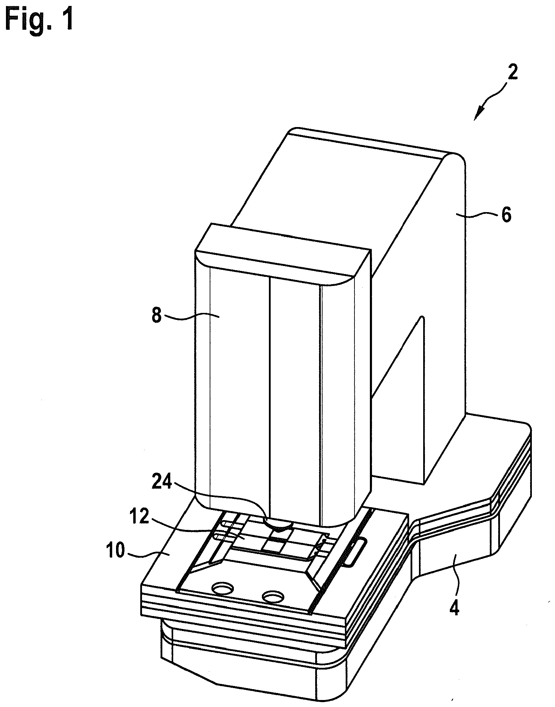

Fig. 1 shows a digital microscope 2, as may be used in a distributed digital microscopy system in accordance with an exemplary embodiment of the invention, in a perspective, three-dimensional view. The digital microscope 2 has a base 4, which supports the digital microscope 2. The base 4 may be placed on a table for providing a secure stand.

In the exemplary embodiment of Fig. 1, the base 4 comprises a main illumination assembly, an overview illumination assembly, and a stage drive assembly, which are blocked from view by a base housing in Fig. 1. With the base 4 housing the main illumination assembly and the overview illumination assembly in the exemplary embodiment of Fig. 1, the base housing may also be referred to as illumination housing. It is also possible that a dedicated portion of the base 4, which may be segregated from the rest of the base 4, is employed for housing the main illumination assembly and the overview illumination assembly and that said dedicated portion of the base 4 is referred to as illumination housing. It is also possible that the main illumination assembly and the overview illumination assembly have separate housing within the base 4.

A stage 10 is mounted to the base 4. The stage is movable with respect to the base 4. In particular, the stage 10 is movable in two dimensions, referred to as x- and y-directions herein. In operation, the stage 10 is moved by the stage drive assembly in the x- and y-directions. The moving plane of the stage 10 may also be referred to as the x-y-plane of the digital microscope 2.

The stage 10 has a light transmissive portion, in particular a transparent portion. One or more samples may be placed on the light transmissive portion of the stage 10. In the operating scenario depicted in Fig. 1, two microscope slides 12 are arranged on the light transmissive portion of the stage 10 via a clipping mechanism. The microscope slides 12 are holding structures / carrying structures for samples to be analyzed via the digital microscope 2. The plane of the light transmissive portion of the stage 10 may be an alternative definition for the x-y-plane of the digital microscope 2.

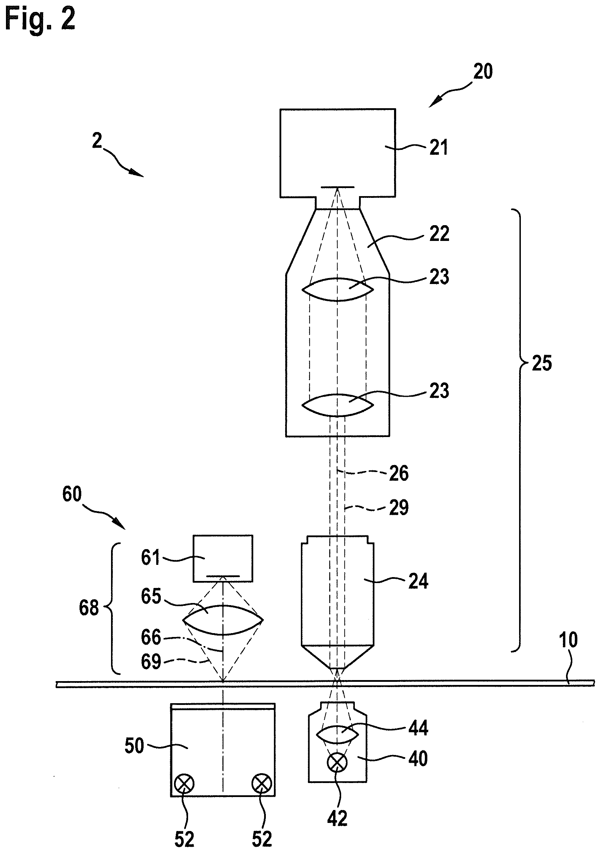

In the exemplary embodiment of Fig. 1, both the main illumination assembly and the overview illumination assembly illuminate the sample(s) from the bottom. The digital microscope 2 of Fig. 1 is a transmitted light microscope. Details of the illumination capacities of the digital microscope 2 will be described below with respect to Fig. 2. However, it is pointed out that the digital microscope may also be another kind of microscope, such as a reflected light microscope. The overview illumination assembly generally provides for illumination with visible light, in particular white light. While the main illumination assembly may also provide for illumination with visible light, in particular white light, other types of illumination are possible as well. For example, the main illumination assembly may provide for illumination with UV light, as may be desired when the digital microscope is a fluorescence microscope. It is also possible that the main illumination assembly comprises one or more laser light sources, as may be desired in a digital microscope intended for label free diagnostics. Exemplary techniques, which may be implemented in the digital microscope, are Raman spectroscopy, CARS (Coherent Anti-Stokes Raman Scattering), SRS (Stimulated Raman Scattering), SHG (Second Harmonic Generation), TPEF (Two Photon Excited Fluorescence), and FLIM (Fluorescence Lifetime Imaging).

The digital microscope 2 further comprises a support arm 6 and a main microscope housing 8. The support arm 6 is shaped to support the main microscope housing 8, such that the main microscope housing 8 hovers over the stage 10. The main microscope housing 8 houses various optical components of a microscopic image acquisition portion and various optical components of an overview image acquisition portion. The details thereof will be discussed below with respect to Fig. 2. While most of said optical components of the microscopic image acquisition portion and the overview image acquisition portion are blocked from view in Fig. 1 by the base housing and the main microscope housing 8, a microscope objective 24, which is part of the microscopic image acquisition portion, extends from the main microscope housing 8 towards the stage 10.

The main microscope housing 8 is movable with respect to the support arm 6 in a moving direction orthogonal to the x-y-plane. In other words, the main microscope housing 8 is movable in the z-direction of the digital microscope 2. While this movement is quite limited, it is sufficient to bring a sample in focus with respect to the optical system contained in the main microscope housing 8.

In operation, the stage drive assembly brings the stage 10 to desired positions in the x- and y-directions. The stage drive assembly may have any kind of suitable actuators, such as two small-scale electric motors for the two directions of movement. The main illumination assembly and the overview illumination assembly provide for illumination of the sample(s), present on the slide(s) 12, from underneath, and image data of that portion of a sample, placed in the way of light from the main illumination assembly / overview illumination assembly to a main image sensor / to an overview image sensor can be captured. Via driving the stage 10 to various positions, the sample can be scanned and image data of the whole sample can be generated. It is possible to generate a full overview image of the sample / slide and to generate a full microscopic image or one or more microscopic images of one or more portions of the sample / slide via the overview image acquisition portion and the microscopic image acquisition portion.

Fig. 2 shows selected components of the digital microscope 2 of Fig. 1 in a schematic view. In particular, Fig. 2 illustrates the components relevant for the illumination of the sample 12 and the guiding of light within the main microscope housing 8, both for the generation of overview images and for the generation of microscopic images. The digital microscope 2 has a microscopic image acquisition portion 20 and an overview image acquisition portion 60.

The microscopic image acquisition portion 20 comprises a main illumination assembly 40. In the exemplary embodiment of Fig. 2, the main illumination assembly 40 is arranged below the stage 10, i.e. below the sample(s) on the slide(s), and directs light upwards towards the sample(s) / slide(s). In the exemplary embodiment of Fig. 2, the main illumination assembly 40 has a main illumination light source 42 and a collimating lens 44 for directing a large amount of light towards that comparably very small portion of the sample, whose representation is captured. The main illumination light source 42 may be a white light source, such as a white LED, emitting broad band visible light. It is pointed out that the main illumination assembly 40 may have any suitable set-up / design.

The microscopic image acquisition portion 20 further has an optical system 25. In the exemplary embodiment of Fig. 2, the optical system 25 has a tube objective 22 and a microscope objective 24. The tube objective 22 has individual tubus lenses 23.

The optical system 25 is provided for achieving a desired magnification of the portion of the sample whose representation is captured. The microscope objective 24 and the tube objective 22 jointly provide a magnification of a portion of the sample, with the magnified representation of the portion of the sample being captured by a main image sensor 21. In other words, the microscope objective 24 and the tube objective 22 jointly provide the optical magnification for the image data to be captured. While the magnification may be a product of both the design of the tube objective 22 and the design of the microscope objective 24, it is customary nomenclature to attribute a magnification factor to the microscope objective 24. On the basis of this nomenclature, the microscope objective 24 may be said to be a 20x magnification microscope objective, a 40x magnification microscope objective, a 60x magnification microscope objective or any other suitable magnification factor microscope objective.

The optical system 25 has a center axis 26. The center axis 26 may also be referred to as the center axis of the microscope objective 24. The center axis 26 is substantially orthogonal to the stage 10. In the exemplary embodiment of Fig. 2, the center axis 26 runs from the main illumination light source 42 through the collimating lens 44, through the stage 10, through the microscope objective 24, through the tube objective 22, and to the main image sensor 21. The center axis 26 may be the single direction that a light ray may travel through the optical system 25, without being refracted.

The microscopic image acquisition portion 20 further has a main image sensor 21. The main image sensor 21 may be provided with a shutter. It may also have other components customary in the field of digital cameras, which may contribute to the operation of the main image sensor 21 when capturing image data. The tube objective 22 directs the light, coming from the microscope objective 24, towards the main image sensor 21. In this way, a light beam path 29 from the main illumination assembly 40 through the sample, through the microscope objective 24, through the tube objective 22, and to the main image sensor 21 is established. The main image sensor 21 may be a digital color sensor, for example built with CMOS technology. It is pointed out that the main image sensor may be any suitable image sensor for capturing the image data.

Besides the microscopic image acquisition portion 20, the digital microscope 2 has an overview image acquisition portion 60.

The overview image acquisition portion 60 comprises an overview illumination assembly 50. The overview illumination assembly 50 is arranged below the stage 10, i.e. below the sample(s) on the slide(s), and directs light upwards towards the sample(s) / slide(s). The overview illumination assembly 50 comprises a plurality of overview illumination LEDs 52.

In the exemplary embodiment of Fig. 2, the plurality of overview illumination LEDs 52 are arranged in a plane substantially parallel to the stage 10, i.e. substantially parallel to the x-y-plane of the digital microscope 2, and are directed upwards towards the stage 10. In other words, the plurality of overview illumination LEDs 52 are arranged to have their main light emission directions, i.e. their light emission directions of highest light intensity, towards the stage 10. The main light emission directions may in particular be orthogonal to the x-y-plane of the stage 10.

In the cross-section-like schematic drawing of Fig. 2, only two overview illumination LEDs 52 are depicted. It is understood that a larger number of overview illumination LEDs may be arranged along a circular contour or along a polygonal contour in above described plane substantially parallel to the stage 10. The circular or polygonal contour runs around a center axis 66, which is substantially orthogonal to the stage 10. It is also possible that only a single overview illumination LED is provided in the overview illumination assembly 50. Said single overview illumination LED may be arranged on the center axis 66. Other set-ups of the overview illumination assembly 50 are possible as well.

In the exemplary embodiment of Fig. 2, the plurality of overview illumination LEDs 52 are white LEDs. It is also possible that the overview illumination LEDs 52 are of a different color and/or that the overview illumination LEDs 52 have LEDs of different colors.

The overview image acquisition portion 60 further comprises an overview digital camera 68. The overview digital camera 68 comprises an overview image sensor 61 and overview camera optics 65. In the exemplary embodiment of Fig. 2, the overview camera optics 65 are a single lens. It is also possible that the overview camera optics 65 comprise a camera objective or any other suitable optical device for directing light, coming from the stage 10, towards the overview image sensor 61. The overview camera optics 65 have a center axis 66. The center axis 66 runs through the overview camera optics 65 and reaches the overview image sensor 61 substantially at its center. The center axis 66 may be the single direction that a light ray may travel through the camera optics 65, without being refracted.

The overview digital camera 68 is arranged above the stage 10. Accordingly, the overview digital camera 68 and the overview illumination assembly 50 are arranged on different sides of the stage 10. When disregarding the difference in magnification, the overview image acquisition portion 60 works in accordance with the principles of a transmitted light microscope.

As stated above, the overview digital camera 68 has an overview image sensor 61. The overview image sensor 61 may be provided with a shutter. It may also have other components customary in the field of digital cameras, which may contribute to the operation of the overview image sensor 61 when capturing image data. For capturing image data, a light beam path 69 from the stage 10 to the overview image sensor 61 may be used. It is understood that the light beam path 69 is depicted in a highly simplified way in Fig. 2. It is further understood that light from an extended area of the stage 10 is directed towards the overview image sensor 61 by the overview camera optics 65. The extended area of the stage, whose image is captured via the overview image sensor 61, may have an extension of various centimeters in both the x-dimension and the y-dimension.

In the schematic representation of Fig. 2, the center axis 66 of the camera optics 65 is depicted as running from the center of the overview image sensor 61 through the overview camera optics 65, through the stage 10 and through the overview illumination assembly 50. The plurality of overview illumination LEDs 52 are offset from said center axis 66 of the overview camera optics 65.

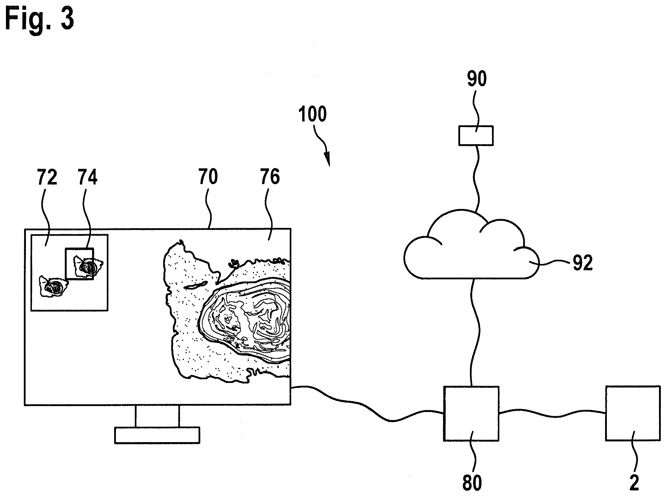

Fig. 3 shows a schematic diagram of a distributed digital microscopy system 100 in accordance with an exemplary embodiment of the invention. The distributed digital microscopy system 100 comprises a digital microscope 2. The digital microscope 2 may be a digital microscope 2 having the mechanical set-up as described with respect to Fig. 1 and the optical set-up as described with respect to Fig. 2. With respect to Fig. 3, the focus is on the user perspective and a potential implementation of the user interaction with the distributed digital microscopy system 100.

The distributed digital microscopy system 100 further comprises a user computer 80, coupled to the digital microscope 2. The user computer 80 has a screen 70. The user computer 80 may be any kind of suitable processing device that provides for an interaction between the screen 70 and the digital microscope 2 in a suitable manner. The user computer 80 may for example be a standard personal computer, embodied as a desktop computer or a laptop. The processing capacity of the user computer 80 may also be embedded into the digital microscope 2. In this case, the digital microscope 2 and the user computer 80 may be an integrated device, and the screen 70 may be coupled to said integrated device. It is also possible that the user computer 80 and the screen 70 are an integrated device. The screen 70 may for example be part of a tablet or a smartphone, having both the screen functionality and the processing functionality for interfacing directly with the digital microscope 2.

Jointly, the digital microscope 2 and the user computer 80 from a user interface system of the distributed digital microscopy system 100.

The screen 70 may form the control interface for the user of the distributed digital microscopy system 100. In the exemplary embodiment of Fig. 3, the screen 70 is a touch screen, so that the screen 70 provides both user input functionality and image output functionality. The user may control the operation of the digital microscope 2 via the touch screen 70 and may generate updated segmented versions of overview images, as will be discussed below, via the touch screen 70. However, it is also possible that other input devices are provided in addition / as an alternative to the touch screen 70. For example, a keyboard and/or a mouse and/or any other suitable input device may be provided for the user to control the digital microscope 2 and to generate updated segmented versions of overview images, as will be discussed below. It is also possible that multiple screens are provided for the output of images.

The distributed digital microscopy system 100 further comprises a server system 90. The server system 90 is in particular a remote server system / cloud server system. In the exemplary embodiment of Fig. 3, the user computer 80 and, thus, also the digital microscope 2 are coupled to the remote server system 90 via a communication network 92, such as the internet.

The distributed digital microscopy system 100 may be used for various different operations. The distributed digital microscopy system 100 may be used for scanning a sample with the digital microscope 2 and for generating and storing an image file archive containing image data of said sample. The generated image file archive may be stored locally on the user computer 80 or remotely on the server system 90. The distributed digital microscopy system 100 may further be used for viewing images on the screen 70. In particular, the distributed digital microscopy system 100 may be used for viewing images restored from image file archives. The image file archives may be stored on the user computer 80 and/or on the server system 90 and may be read out therefrom.

In the exemplary embodiment of Fig. 3, the screen 70 provides two different outputs. In the upper left corner of the screen 70, an overview image 72 is displayed. The overview image 72 may provide orientation to a user and may help the user to navigate a high resolution scan of a sample.

In the exemplary embodiment of Fig. 3, the user may select a region of interest 74 in the overview image 72. The selection of the region of interest 74 is a user selection that determines which portion of a high resolution scan is displayed in a full screen window 76. The user selection may be made in any suitable manner, such as with the user's fingers on the touch screen 70, with a suitable stylus, with an ancillary input device, such as a mouse, with menu-based selection tools, etc..

In addition to the viewing of a high resolution scan of a particular sample, the full screen window 76 may be used for viewing a segmentation of an overview image and for updating the segmentation of the overview image. For example, after an overview image of a particular sample has been generated, said overview image may be segmented with a pre-trained artificial intelligence, details of which will be described below. An enlarged representation of the segmented version of the overview image may be displayed on the full screen window 76, such that individual pixels of the segmented version of the overview image become discernible. The user may update the segmentation, as carried out by the pre-trained artificial intelligence. This update may take place on a pixel level of the overview image. The user may update the segmentation, in order to achieve a more suitable semantic segmentation into the segmentation classes of sample and background. The updating of the segmentation may take place via the touch screen 70 or via other input devices, such as a mouse or a keyboard. The updated segmented version of the overview image is passed on to the server system 90 via the user computer 80, either as it becomes available or in the course of a batch upload of updated segmented versions of overview images.

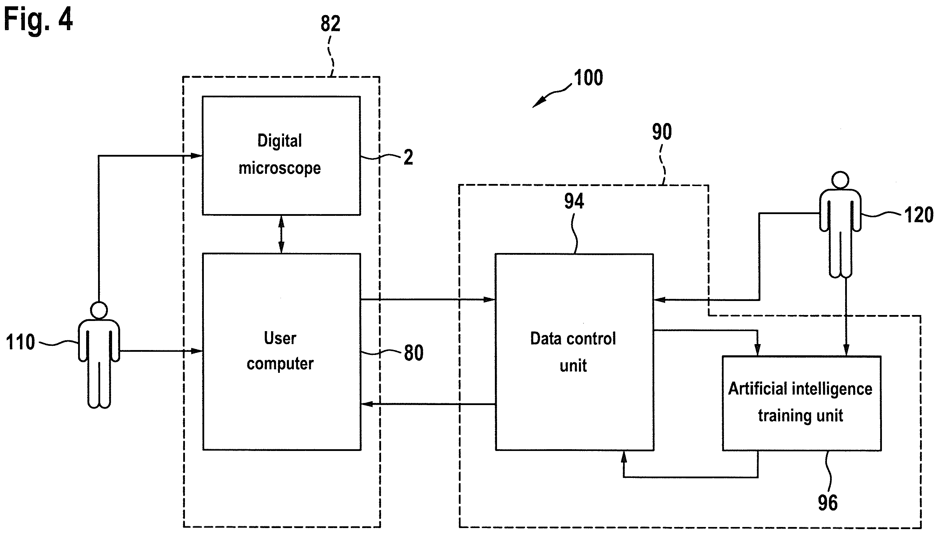

Fig. 4 shows a block diagram of a distributed digital microscopy system 100 in accordance with an exemplary embodiment of the invention. The distributed digital microscopy system 100 comprises a user interface system 82 and a server system 90. The user interface system 82 comprises a digital microscope 2 and a user computer 80. The user interface system 82 allows for a human user 110 to interact with the distributed digital microscopy system 100. The user 110 may also be referred to as a front-end user of the distributed digital microscopy system 100.

In the exemplary embodiment of Fig. 4, the user 110 can interact with both the digital microscope 2 and the user computer 80. The digital microscope 2 may be a digital microscope as described above with respect to Fig. 1 and Fig. 2. In this case, the user 110 may place microscope slides on the stage 10. The digital microscope 2 may carry out both the overview image acquisition and the microscopic image acquisition. The microscope slides may be placed manually onto the stage of the digital microscope 2 by the user 110. It is also possible that an automated slide feeding device is provided for placing the microscope slides onto the stage of the digital microscope 2. It is further possible that the digital microscope 2 is comprised of two separate units for the overview image acquisition and the microscopic image acquisition and that the microscope slides are moved through such a digital microscope in a production line manner, e.g. via suitable robotic devices.

As stated above, the user 110 can also interact with the user computer 80. This interaction may take place in any of the ways described above with respect to Fig. 3. With the user computer 80, the user 110 may control the digital microscope 2. In particular, the user 110 may start / stop scanning operations, may provide indications that new microscope slide(s) are placed on the stage of the digital microscope 2, may indicate what kind of illumination of the microscope slides is desired, etc.. Further, the user 110 may use the user computer 80 for updating segmentations of overview images, as carried out by an artificial intelligence.

The distributed digital microscopy system 100 further comprises a server system 90. The server system 90 is remote from the user interface system 82. In particular, the server system 90 may be located at a remote, central location and may be considered a cloud-based server system. The server system 90 comprises a data control unit 94 and an artificial intelligence training unit 96. In the data control unit 94, overview images and associated annotation data regarding the segmentation of the overview images are stored. Also, different versions of an artificial intelligence, configured for segmenting overview images, may be stored in the data control unit 94. The artificial intelligence training unit is configured for generating an artificial intelligence, adapted / configured for segmenting overview images, with the artificial intelligence being a product of an artificial intelligence training with the help of annotated overview images. The overview images may be provided from the data control unit 94 to the artificial intelligence training unit 96, and the trained artificial intelligence may be provided from the artificial intelligence training unit 96 to the data control unit 94. A background data analyst 120 may interact both with the data control unit 94 and the artificial intelligence training unit 96, as will be described below.

A two-way communication between the user computer 80 of the user interface system 82 and the data control unit 94 of the server system is provided in the distributed digital microscopy system 100. Via the two-way communication, the user computer 80 may transfer overview images from the user computer 80 to the data control unit 94. In particular, the user computer 80 may transfer segmented versions of the overview images as well as updated segmented versions of the overview images, updated in accordance with input from the user 110, from the user computer 80 to the data control unit 94. It is also possible that the user computer 80 relays the user input from the user 110 regarding the segmentation of overview images on to the data control unit 94. Further, via the two-way communication, the data control unit 94 may transfer a trained artificial intelligence from the server system 90 to the user computer 80. It is also possible that the data control unit 94 provides overview images to the user computer 80, in order for the user 110 to view the overview images and to potentially send updated segmentation information back to the data control unit 94.

The two-way communication between the user interface system 82 and the server system 90 may be implemented via any suitable communication network, such as the internet.

An operation of the distributed digital microscopy system 100 is described as follows.

In a set-up phase, a pre-trained artificial intelligence for segmenting overview images is generated. For this purpose, an inital annotated training set of overview images is provided to the artificial intelligence training unit 96 by the background data analyst 120 or is selected from the data control unit 94 by the background data analyst 120 for being provided to the artificial intelligence training unit 96. The initial annotated training set of overview images is a set of overview images, supplemented with segmentation data. In the exemplary embodiment of Fig. 4, it is specified for each pixel of each overview image of said set of overview images whether the pixel in question has the segmentation class "sample" or the segmentation class "background". With this data basis acting as the training input, the artificial intelligence training unit 96 generates the pre-trained artificial intelligence, configured for segmenting overview images. The artificial intelligence training unit 96 provides said pre-trained artificial intelligence to the data control unit 94. The data control unit 94 may then provide the pre-trained artificial intelligence to the user computer 80.

In a first production phase, overview images for a first group of microscope slides are generated with the digital microscope 2. These overview images are also referred to as the first group of overview images. At the user computer 80, the first group of overview images are segmented with the pre-trained artificial intelligence. In the course of said segmentation, the segmentation class "sample" or the segmentation class "background" is attributed to each pixel of each overview image of the first group of overview images. On the basis of said segmentation, selective portions of the first group of microscope slides are scanned. In particular, with the microscopic image acquisition portion of the digital microscope 2, those portions of the microscope slides are scanned that correspond to the portions of the overview images that have the segmentation class "sample". It is understood that practical limitations of the microscopic image acquisition portion of the digital microscope 2 may result in a non-perfect correspondence between the portions of the overview images that have the segmentation class "sample" and those portions of the microscope slide that are scanned for the provision of high resolution microscopic images. In particular, the digital microscope 2 may be configured to adapt / extend the portions of the microscope slides to be scanned, where technically required.

In a system modification phase, the segmented versions of the first group of overview images are displayed to the user 110 via the user computer 80. The segmented versions of the first group of overview images may be displayed one overview image at a time. For each of the first group of overview images, the user 110 may decide whether to check the segmentation, as carried out by the pre-trained artificial intelligence, and whether to update / alter the segmentation, as carried out be the pre-trained artificial intelligence. When updating / altering the segmentation, the user 110 may, on a pixel-by-pixel level, flip the segmentation class between "sample" and "background", wherever he / she is not satisfied with the segmentation, as carried out by the pre-trained artificial intelligence. The result of this operation are updated segmented versions of overview images. In particular, for a subset of the first group of overview images, the user input results in the provision of updated segmented versions of the overview images in question. It can also be said that the user input represents updated segmented versions of a subset of the first group of overview images. The user input may be relayed on to the server system 90 in a suitable manner. In particular, the information regarding the updated segmented versions of the subset of the first group of overview images may be provided from the user computer 80 to the data control unit 94 and may be stored there.

Still in the system modification phase, the data control unit 94 provides an updated annotated training set of overview images to the artificial intelligence training unit 96. The updated annotated training set of overview images contains the initial annotated training set of overview images and additional annotated overview images, based on the updated segmented versions of the subset of the first group of overview images. The artificial intelligence training unit 96 generates a re-trained artificial intelligence, trained with said updated annotated training set of overview images, and provides the re-trained artificial intelligence to the data control unit 94. The data control unit 94 provides the re-trained artificial intelligence to the user computer 80.

In the system modification phase, additional checks may be carried out in the server system 90. For example, when the user input is passed on to the data control unit 94, a plausibility check of the updated segmented versions of the subset of the first group of overview images may be carried out. The plausibility check may be an automated plausibility check, carried out by the data control unit 94. For example, the data control unit 94 may apply a suitable image processing algorithm and metric to check whether the updated segmentation by the user 110 leads to one or more pixels where the altered segmentation has a high probability of being incorrect. Such determination may take extended portions or the entire overview images into account. The background data analyst 120 may initiate and control such an automated plausibility check. It is also possible that the background data analyst 120 carries out a manual plausibility check, such as a manual spot check of updated segmented versions of a few overview images. In case irregularities in the updated segmented versions of the subset of the first group of overview images are detected, it is possible not to use the additional annotated overview images for a re-training of the artificial intelligence.

As a further example of an additional check, the re-trained artificial intelligence may be benchmarked against the pre-trained artificial intelligence in the data control unit 94. For example, the re-trained artificial intelligence and the pre-trained artificial intelligence may both be applied to a performance check set of overview images. Only in case the re-trained artificial intelligence provides better segmentation results than the pre-trained artificial intelligence, the re-trained artificial intelligence is provided to the user computer 80. The evaluation in terms of segmentation quality may be carried out in an automated manner or via a manual inspection of the segmentation results by the background data analyst 120.

In a second production phase, overview images for a second group of microscope slides are generated with the digital microscope 2. These overview images are also referred to as the second group of overview images. At the user computer 80, the second group of overview images are segmented with the re-trained artificial intelligence. In the course of said segmentation, the segmentation class "sample" or the segmentation class "background" is attributed to each pixel of each overview image of the second group of overview images. On the basis of said segmentation, selective portions of the second group of microscope slides are scanned. In particular, with the microscopic image acquisition portion of the digital microscope 2, those portions of the microscope slides are scanned that correspond to the portions of the overview images that have the segmentation class "sample". In this way, the re-trained artificial intelligence, which is expected to yield improved segmentation results, is used for segmentation and, thus, for the selection of regions of interest to be scanned. As a result, a quicker and/or more targeted and/or more complete scanning of the regions of interest may be achieved with the second group of microscope slides.

It is pointed out that multiple iterations of altering / updating segmented versions of overview images by the user and of re-training the artificial intelligence may be carried out. In this way, the re-trained artificial intelligence may become iteratively better and/or more adapted to a particular user's preferences over time.

While the set-up phase, the first production phase, the system modification phase, and the second production phase are described as phases of the operation of the distributed digital microscopy system, they do not necessarily have to be carried out one after the other. In particular, it is possible that certain portions of the phases overlap / are carried out simultaneously. As an example, the scanning of the sample portions of the first group of overview images may take place at the same time as the updating of the segmentation of the first group of overview images by the user 110.

It is possible that the distributed digital microscopy system 100 has multiple user interface systems. Each of the multiple user interface systems may have the same or a similar set-up as the user interface system 82 of Fig. 4 and may be coupled to the server system 90 in the same or a similar manner. With multiple user interface systems being present and being coupled to the server system 90, it is possible to combine updated segmented versions of overview images from multiple sources and include a large data basis of updated segmented versions of overview images into the re-training of the artificial intelligence. In this way, a particularly quickly learning framework for the segmentation of overview images may be provided.

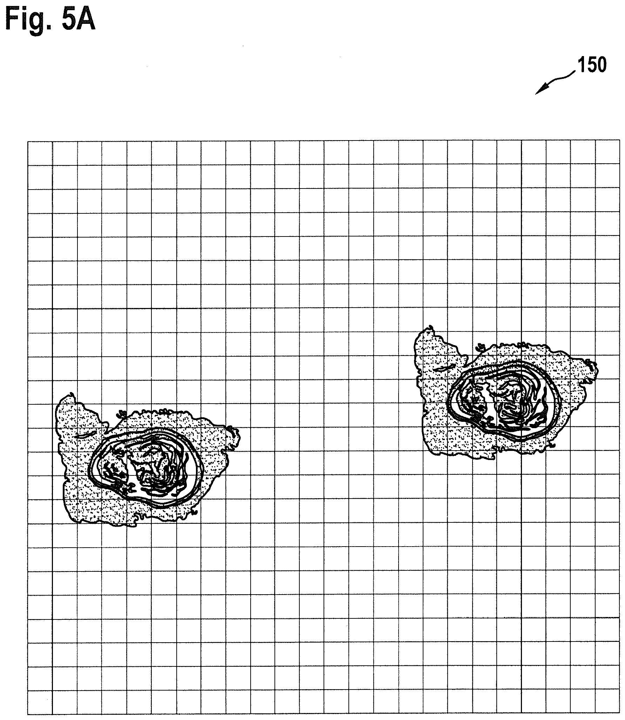

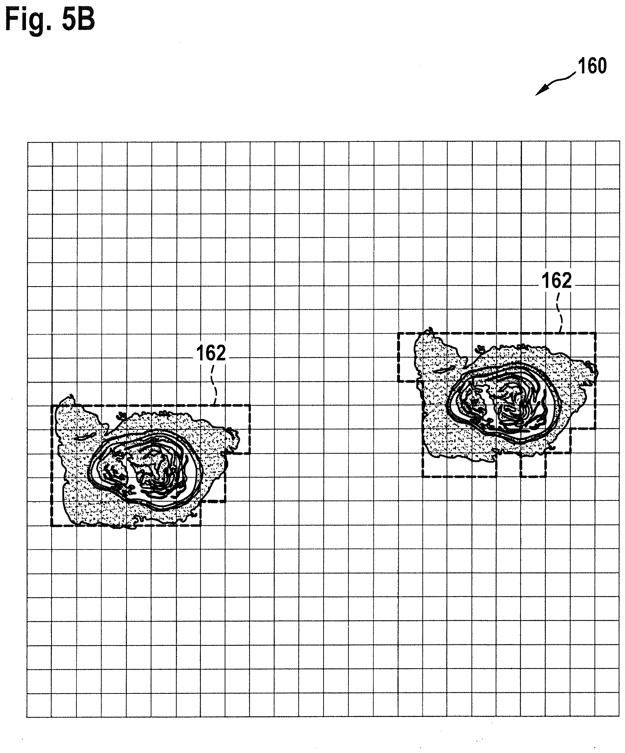

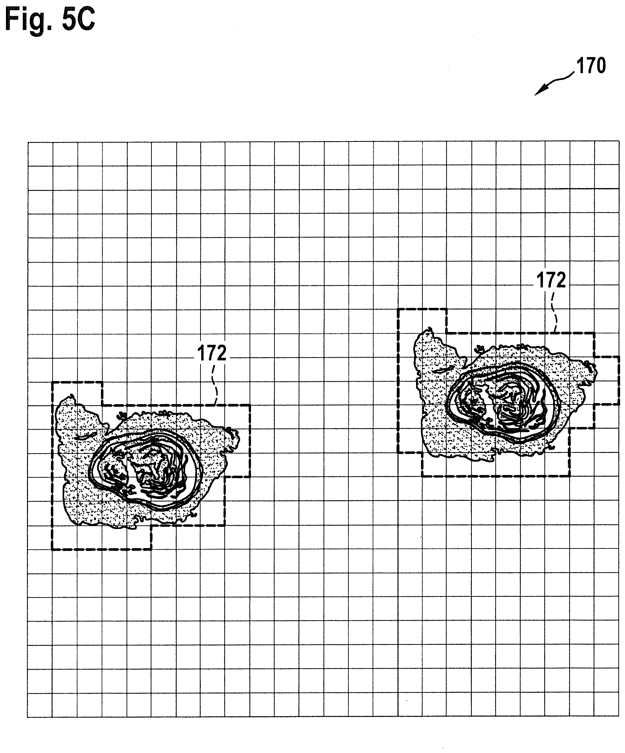

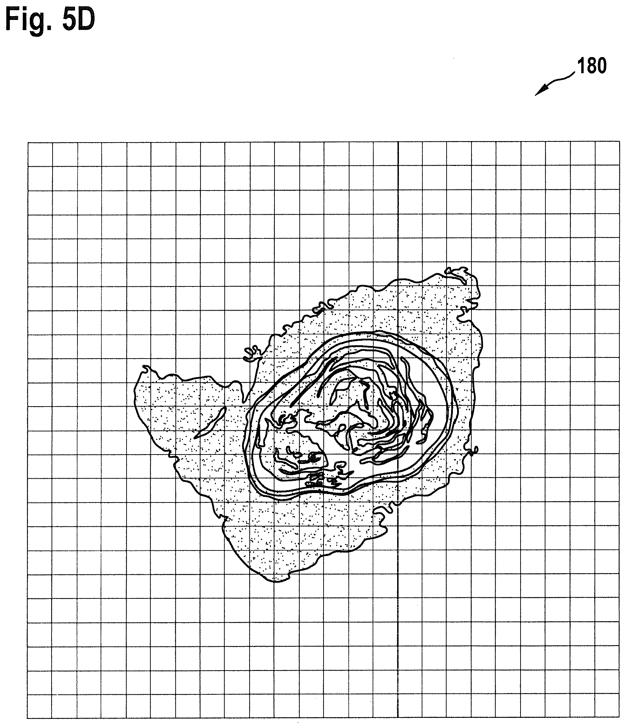

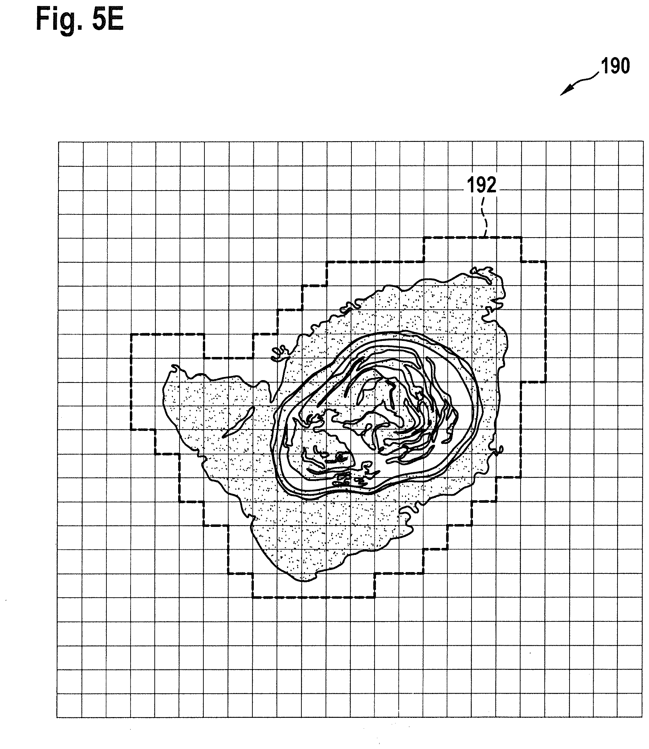

Fig. 5 illustrates an operation of a distributed digital microscopy system in accordance with an exemplary embodiment of the invention, with Figs. 5A, 5B, 5C, 5D, and 5E depicting individual overview images and segmented versions thereof for illustrative purposes. The distributed digital microscopy system, whose operation is illustrated in Fig. 5, may be the distributed digital microscopy system 100 of Fig. 4 or another distributed digital microscopy system in accordance with an exemplary embodiment of the invention.

Fig. 5A depicts an overview image 150 of a slide carrying a biological sample. In particular, Fig. 5A depicts an overview image 150 that shows two biological cells and ample interstitial fluid / tissue fluid around and between the two biological cells. The two biological cells are considered the regions of interest of the overview image 150, and the interstitial fluid / tissue fluid is considered background / non-sample contents for the purpose of generating a high resolution scan of the two biological cells. The overview image 150 has been generated with an overview image acquisition portion of a digital microscope and is part of a first group of overview images.

Fig. 5A shows the overview image 150 overlaid with a regular grid pattern. The regular grid pattern is provided to indicate a partitioning of the overview image into a plurality of image portions, here 24 x 24 image portions, for the task of segmentation. Solely for illustrative purposes, the image portions are quite large in the exemplary representation of Fig. 5A. It is understood that the task of segmentation may also be carried out in a much more granular manner. In particular, it is possible that small pixel windows, such as 2x2 or 3x3 or 4x4 or 5x5 pixel windows, or individual pixels of the overview image may be looked at for the task of segmentation.

Fig. 5B depicts a segmented version 160 of the overview image 150 of Fig. 5A. The segmented version 160 is the result of the application of the pre-trained artificial intelligence, as described above with respect to Fig. 4, to the overview image 150. In particular, the pre-trained artificial intelligence has assigned the semantic class of "sample" or the semantic class of "background" to each of the image portions of the overview image 150. The borders between the image portions that are considered "sample" and the image portions that are considered "background" are indicated via dashed border lines 162 in Fig. 5B. It can be seen that the pre-trained artificial intelligence is quite aggressive in considering image portions "background", i.e. quite aggressive in disregarding image portions from the ensuing high resolution scanning of the "sample" image portions. As a result, small edge portions of the two biological cells are considered "background" in the segmented version 160 of the overview image 150.

Fig. 5C depicts an updated segmented version 170 of the overview image 150. The updated segmented version 170 is the result of a user update regarding the segmentation carried out by the pre-trained artificial intelligence and illustrated in Fig. 5B. In the exemplary embodiment of Fig. 5, the user has updated various image portions, which had been marked as "background", to be considered "sample". The new borders between the image portions that are considered "sample" and the image portions that are considered "background" are indicated via dashed border lines 172 in Fig. 5C. The dashed border lines 172 do not cut through or touch the two biological cells in the updated segmented version 170 of the overview image 150. In this way, the separation between sample and background is less aggressive in the updated segmented version 170 of the overview image 150.

The updated segmented version 170 of the overview image 150 is provided to the server system, together with other updated segmented versions of overview images. At the server system, a re-trained artificial intelligence is generated, wherein the training of the re-trained artificial intelligence involves the data basis of the pre-trained artificial intelligence and the updated segmented versions of the overview image 150 and of said other overview images.

Fig. 5D depicts another overview image 180 of another slide carrying a biological sample. In particular, Fig. 5D depicts an overview image 180 that shows one biological cell and interstitial fluid / tissue fluid around the biological cell. The overview image 180 has been generated with an overview image acquisition portion of a digital microscope and is part of a second group of overview images.

Fig. 5E depicts a segmented version 190 of the overview image 180 of Fig. 5D. The segmented version 190 is the result of the application of the re-trained artificial intelligence to the overview image 180. In particular, the re-trained artificial intelligence has assigned the semantic class of "sample" or the semantic class of "background" to each of the image portions of the overview image 180. The borders between the image portions that are considered "sample" and the image portions that are considered "background" are indicated via dashed border lines 192 in Fig. 5E. It can be seen that the re-trained artificial intelligence is less aggressive in considering image portions "background", as compared to the pre-trained artificial intelligence. Accordingly, as compared to the pre-trained artificial intelligence, the re-trained artificial intelligence yields segmentation results that are more targeted towards the user preferences of achieving a complete coverage of the regions of interest, potentially with a safety margin.

The segmented version 190 of the overview image 180 is used to control the digital microscope to scan the "sample" portions of the slide in question. The resulting high resolution scan may thus be more in line with the user expectation, as compared to the hypothetical case of the segmenting of the overview image 180 being done with the pre-trained artificial intelligence.

It is noted that the graphical limitations of schematic drawings lead to the example of Fig. 5, where the segmentation task may look comparably easy. In practice, biological samples may contain complex tissue structures, potentially having multiple layers of tissue and/or complex arrangements of cells. In such cases, the segmentation of overview images is far from straightforward, and it is quite difficult to provide satisfactory segmentation results. With the distributed digital microscopy system and the method of operating a distributed microscopy system according to exemplary embodiments of the invention, improved segmentation results and an effective provision of highly targeted and/or highly complete and/or particularly quick scanning of microscope slides may be achieved. Also, the distributed digital microscopy system and the method of operating a distributed microscopy system according to exemplary embodiments of the invention may yield particularly good segmentation results in more complex segmentation operations, involving three or more segmentation classes.

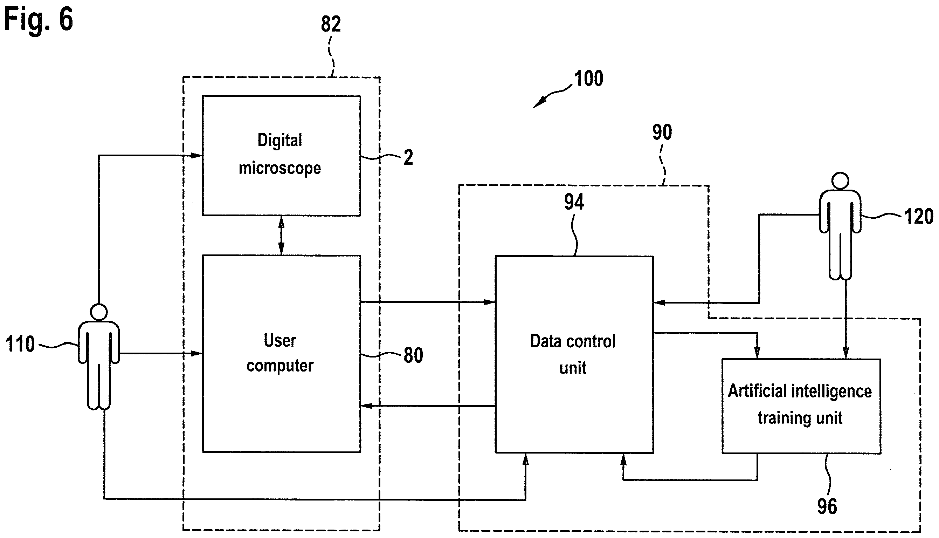

Fig. 6 shows a block diagram of a distributed digital microscopy system 100 in accordance with another exemplary embodiment of the invention. The distributed digital microscopy system 100 is very similar to the distributed digital microscopy system 100 of Fig. 4, and like components are provided with the same reference numerals. Reference is made to their description above.

The distributed digital microscopy system 100 has an additional feature of a direct communication link between the user 110 and the server system 90, in particular between the user 110 and the data control unit 94 of the server system 90. This direct communication link may be implemented via a separate communication device, such as a smartphone or a tablet. With the direct communication link, the user 110 may for example update segmented versions of overview images that are present on the data control unit 94. In other words, the user 110 may provide the user input, representing updated segmented versions of overview images, to the server system via a communication link that is separate from the digital microscope 2. While the direct communication link may thus be somewhat different from the communication described with respect to Fig. 4, the result of providing the updated segmented version of overview images from the user sphere to the server system sphere is comparable. Accordingly, the separate communication device and the user computer 80, which is coupled to the digital microscope 2, may be jointly seen as a distributed form of a user computer that allows the user 110 to interact with the digital microscope 2 and the server system 90. Stated differently, the devices with which the user 110 interacts with the digital microscope 2 and with the server system 90 may be jointly seen as the user computer.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed, but that the invention will include all embodiments falling within the scope of the appended claims.

## Claims

1. Method for operating a distributed digital microscopy system (100), wherein the distributed digital microscopy system (100) comprises a user interface system (82), comprising a user computer (80) and a digital microscope (2) having an overview image acquisition portion (60) and a microscopic image acquisition portion (20), and a server system (90), remote from the user interface system (82),
wherein the method comprises:
with the overview image acquisition portion (60) of the digital microscope (2), generating a first group of overview images for a first group of microscope slides;
segmenting each of the first group of overview images with a pre-trained artificial intelligence, having been trained with an initial annotated training set of overview images;
for a subset of the first group of overview images, receiving user input, representing updated segmented versions of the subset of the first group of overview images, via the user computer (80);
at the server system (90), providing an updated annotated training set of overview images by adding additional annotated overview images, based on said subset of the first group of overview images and said updated segmented versions of the subset of the first group of overview images, to the initial annotated training set of overview images;
at the server system (90), generating a re-trained artificial intelligence, trained with said updated annotated training set of overview images;
with the overview image acquisition portion (60) of the digital microscope (2), generating a second group of overview images for a second group of microscope slides;
segmenting each of the second group of overview images with the re-trained artificial intelligence; and
with the microscopic image acquisition portion (20) of the digital microscope (2), selectively scanning those regions of the second group of microscope slides that correspond to one or more predetermined segmentation classes.

2. Method according to claim 1, wherein said segmenting of each of the first group of overview images and/or said segmenting of each of the second group of overview images comprises a pixel-based segmenting of each of the first group of overview images and/or each of the second group of overview images.

3. Method according to claim 1 or 2, wherein said segmenting of each of the first group of overview images and/or said segmenting of each of the second group of overview images comprises a semantic segmentation of each of the first group of overview images and/or each of the second group of overview images.

4. Method according to claim 3, wherein said semantic segmentation uses at least two semantic classes, in particular exactly two semantic classes, such as the semantic classes of sample and background.

5. Method according to claim 3 or 4,
wherein said segmenting of each of the first group of overview images with the pre-trained artificial intelligence comprises segmenting each of the first group of overview images with exactly two segmentation classes,
wherein said segmenting of each of the second group of overview images with the re-trained artificial intelligence comprises segmenting each of the second group of overview images with the same exactly two segmentation classes, and
wherein those regions of the second group of microscope slides are selectively scanned that correspond to a particular predetermined one of the exactly two segmentation classes.

6. Method according to any of the preceding claims, wherein each of the first group of overview images and/or each of the second group of overview images has between 1000 and 4000 pixels in a first dimension and between 500 and 2000 pixels in a second dimension, in particular about 2000 x 1000 pixels.

7. Method according to any of the preceding claims, wherein the pre-trained artificial intelligence has been trained with at least 500 annotated overview images, in particular with between 1000 and 5000 annotated overview images, further in particular with between 2000 and 3000 annotated overview images.

8. Method according to any of the preceding claims,
wherein the pre-trained artificial intelligence comprises a convolutional neural network;
and/or
wherein the re-trained artificial intelligence comprises a convolutional neural network.

9. Method according to any of the preceding claims, further comprising:
at the server system (90), checking said updated segmented versions of the subset of the first group of overview images and/or checking a performance of the re-trained artificial intelligence in comparison with the pre-trained artificial intelligence.

10. Method according to any of the preceding claims, further comprising:
obtaining a user identification, associated with the user input;
wherein said providing of the re-trained artificial intelligence is carried out in a user-specific manner, depending on said user identification.

11. Method according to any of the preceding claims, further comprising:
for a subset of the second group of overview images, receiving user input, representing updated segmented versions of the subset of the second group of overview images, via the user computer (80);
at the server system (90), expanding the updated annotated training set of overview images by adding additional annotated overview images, based on said subset of the second group of overview images and said updated segmented versions of the subset of the second group of overview images, to the updated annotated training set of overview images;
at the server system (90), providing a further re-trained artificial intelligence, trained with said updated annotated training set of overview images;
with the overview image acquisition portion (60) of the digital microscope (2), generating a third group of overview images for a third group of microscope slides;
segmenting each of the third group of overview images with the further re-trained artificial intelligence; and
with the microscopic image acquisition portion (20) of the digital microscope (2), selectively scanning those regions of the third group of microscope slides that correspond to one or more predetermined segmentation classes.

12. Method according to any of the preceding claims, wherein the distributed digital microscopy system (100) comprises multiple user interface systems, each of the multiple user interface systems comprising a user computer and a digital microscope having an overview image acquisition portion and a microscopic image acquisition portion,
wherein said providing of the updated annotated training set of overview images includes adding multiple sets of additional annotated overview images, each of said multiple sets of additional annotated overview images being based on overview images and updated segmented versions of overview images from a particular one of the multiple user interface systems.

13. Distributed digital microscopy system (100), comprising:
a user interface system (82), comprising a user computer (80) and a digital microscope (2), wherein the digital microscope (2) has an overview image acquisition portion (60) and a microscopic image acquisition portion (20),
wherein the user interface system (82) is configured to:
- generate overview images for microscope slides with the overview image acquisition portion (60),
- segment overview images with an artificial intelligence and/or transmit overview images and receive segmented overview images, segmented remotely with an artificial intelligence,
- selectively scan those regions of the microscope slides that correspond to one or more predetermined segmentation classes with the microscopic image acquisition portion (20), and
- receive user input, representing updated segmented versions of overview images;
and
a server system (90), remote from the user interface system (82) and coupled to the user interface system (82) via a communication network (92),
wherein the server system (90) is configured to:
- provide a pre-trained artificial intelligence, trained with an initial annotated training set of overview images,
- pursuant to receiving said user input from the user interface system (82), generate a re-trained artificial intelligence, trained with an updated annotated training set of overview images, wherein the updated annotated training set of overview images comprises the initial annotated training set of overview images and additional annotated overview images, which are based on said user input, and
- provide the re-trained artificial intelligence for segmenting further overview images.

14. Distributed digital microscopy system (100) according to claim 13, wherein the user interface system (82) is configured to semantically segment overview images with an artificial intelligence and/or wherein the user interface system is configured to transmit overview images and to receive semantically segmented overview images, segmented remotely with an artificial intelligence.

15. Distributed digital microscopy system (100) according to claim 13 or 14, comprising:
a plurality of user interface systems, wherein each of the plurality of user interface systems comprises a user computer and a digital microscope having an overview image acquisition portion and a microscopic image acquisition portion,
wherein the server system is configured to:
- pursuant to receiving user input from the plurality of user interface systems, generate the re-trained artificial intelligence, trained with the updated annotated training set of overview images, wherein the updated annotated training set of overview images comprises the initial annotated training set of overview images and multiple sets of additional annotated overview images, which are based on the user input from the plurality of user interface systems.
